# EUROPÄISCHE PATENTSCHRIFT

(11) **EP 0 505 845 B1**
(45) Veröffentlichungstag und Bekanntmachung des Hinweises auf die Patenterteilung: **05.06.1996**
(21) Anmeldenummer: 92104330.3
(22) Anmeldetag: 12.03.1992
(51) Int. Cl.: B62D 1/26, B60L 5/40, E01H 8/12

(54) **Stromzuführungssystem für eine Elektro-Flurförderbahn**
Current supply system for an electrical conveyor track floor
Système d'alimentation à courant pour une voie de transport électrique au sol

(30) Priorität: 28.03.1991 DE 4110381
(43) Veröffentlichungstag der Anmeldung: 30.09.1992
(60) Teilanmeldung: 95102024.7
(73) Patentinhaber: Uttscheid, Georg, D-83026 Rosenheim (DE)
(72) Erfinder: Uttscheid, Georg, D-83026 Rosenheim (DE)
(74) Vertreter: Wächtershäuser, Günter, Prof. Dr.

(56) Entgegenhaltungen:
- EP-A- 0 151 982
- DE-A- 2 542 682
- DE-C- 72 443

## Beschreibung

Die Erfindung betrifft ein Stromzuführungssystem für eine Elektro-Flurförderbahn gemäß dem Oberbegriff des Hauptanspruchs.

Solche Stromzuführungssysteme sind beispielsweise aus der DE-A-2 542 682 bekannt. Dabei ragt eine Stromabnehmereinheit in den Führungskanal mit einem Kohleblock senkrecht nach unten. Bei dieser Anordnung kommt es häufig zu Beschädigungen des Kohleblocks aufgrund von Fremdkörpern im Führungskanal.

Dieses Dokument formt den Oberbegriff des Anspruchs 1.

Aus der EP-A-0 151 982 ist ein Stromzuführungssystem bekannt, das einen Schienenräumbehälter umfaßt, mit dem Fremdkörper aus der Schiene aufgenommen und mitgeführt werden sollen.

Es ist somit Aufgabe der vorliegenden Erfindung, das bekannte Stromzuführungssystem derart weiterzubilden, daß der Stromabnehmer-Kohleblock durch Fremdkörper im Führungskanal nicht beschädigt werden kann und dennoch eine ununterbrochene Stromzuführung gewährleistet ist.

Diese Aufgabe wird erfindungsgemäß durch das Stromzuführungssystem gemäß Patentanspruch 1 gelöst. Vorteilhafte Ausgestaltungen finden sich in den Unteransprüchen.

Im folgenden wird die Erfindung anhand von Zeichnungen näher erläutert. Es zeigen:
- Fig. 1: einen Querschnitt durch eine Stromschieneneinheit einer Elektro-Flurförderbahn mit dem erfindungsgemäßen Stromzuführungssystem; und
- Fig. 2: eine Längsdarstellung, teilweise im Schnitt, des erfindungsgemäßen Stromzuführungssystems.

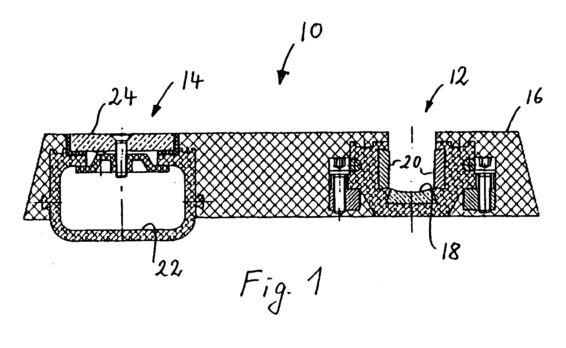

Figur 1 zeigt einen allgemein mit 10 bezeichneten Schienenblock in Modulbauweise für eine Elektro-Flurförderbahn. Dieser umfaßt eine erste Stromschieneneinheit 12 mit einer kanalförmigen Führungsschiene und eine zweite Stromschieneneinheit 14 mit einem Kabelkanal. Die beiden Stromschieneneinheiten sind in einem Block aus Isoliervergußmasse 16 eingegossen und dieser Block wird zur Montage bei der Erstellung des Hallenbodens in Hallenbodenestrich eingegossen.

Die Stromschieneneinheit 12 umfaßt eine kanalförmige Führungsschiene für den Eingriff des Lenksystems des Flurförderfahrzeugs. Am Boden der Führungsschiene befindet sich eine Stromschiene 18 und an den Seitenwandungen sind Leitschienen 20 mit geringer Reibung eingesetzt. Die zweite Stromschieneneinheit umfaßt einen Kabelkanal 22 und eine zweite Stromschiene 24.

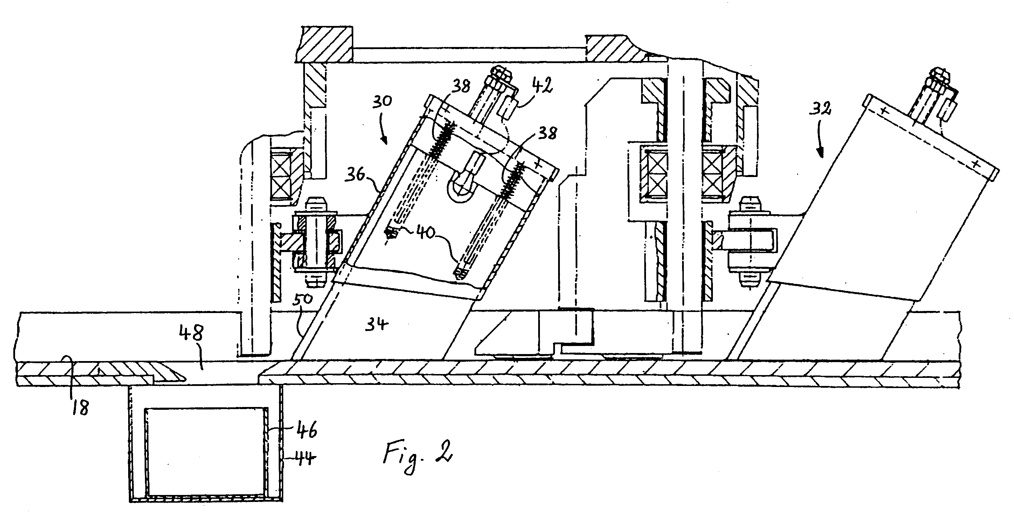

Figur 2 zeigt einen Längsschnitt durch die Führungsschiene mit der Elektrode 18 am Boden. Der Eingriff eines Stromabnehmers in diese Führungsschiene ist schematisch dargestellt, und zwar zusammen mit den nicht näher erläuterten Einrichtungen für die Lenkführung der Flurförderfahrzeuge. Das Stromabnehmersystem umfaßt zwei Stromabnehmer 30, 32, welche hintereinander angeordnet sind und elektrisch parallel geschaltet sind. Hierdurch wird gewährleistet, daß stets die Stromzuführung erhalten bleibt, auch wenn einer der Stromabnehmer durch Stoßbeanspruchung oder dergleichen den Kontakt mit der Stromschiene 18 verliert. Jeder Stromabnehmer umfaßt einen Kohleblock 34, welcher entlang einer schräg zur Längserstreckung der Stromschiene 18 stehenden Achse verschiebbar ist. Der Winkel zwischen der Längsrichtung der Stromschiene 18 und der Verschiebungsrichtung des Kohleblocks 34 ist als spitzer Winkel vorgesehen und liegt vorzugsweise im Bereich von 65 bis 20° und speziell im Bereich von 60 bis 25°. Ein Bereich von 45 bis 30° ist besonders bevorzugt. Das untere Ende eines jeden Kohleblocks 34 ist abgeschrägt, so daß die abgeschrägte Fläche voll auf der Stromschiene 18 aufliegt. Der Kohleblock 34 ist in einem Gehäuse 36 geführt und durch zwei Federn 38 beaufschlagt. Die Federn sitzen in Bohrungen 40 des Kohleblocks. Eine bewegliche Stromzuführung 42 verbindet den Kohleblock mit einem Anschluß.

In regelmäßigen Abständen finden sich Vertiefungen 44 mit Schmutzsammelkästen unter entsprechenden Öffnungen 48 der Stromschiene 18. Falls sich in der Führungsschiene Fremdkörper, zum Beispiel Schrauben oder dergleichen ansammeln, so werden diese durch den schräggestellten, vorderen Kohleblock 34 mitgenommen, bis sie durch die Öffnung 48 in den Schmutzsammelkasten 46 herabfallen. Durch die Schrägstellung des Kohleblocks 34 gestaltet sich diese Selbstreinigungswirkung besonders günstig, ohne daß die Gefahr besteht, daß der Kohleblock durch die Einwirkung der Fremdkörper beschädigt wird. Die Breite der Bodenfläche des Kohleblocks 34 ist derart gewählt, daß sie die Öffnung 48 in der Stromschiene 18 überbrücken kann. Der Querschnitt des Kohleblocks 34 und des Gehäuses 36 ist vorzugsweise rechteckig gewählt. Es kann jedoch auch ein runder Querschnitt vorgesehen sein. Für die Federbeaufschlagung genügen zwei Federn 38, es können jedoch auch drei oder vier Federn vorgesehen sein.

## Patentansprüche

1. Stromzuführungssystem für eine Elektro-Flurförderbahn mit zwei Stromschienen (18, 24), deren erste (18) in einem Führungskanal untergebracht ist und mit einer Stromabnehmereinheit mit mindestens einem in den Führungskanal ragenden Stromabnehmer-Kohleblock (34), dadurch gekennzeichnet, daß die erste Stromschiene (18) am Boden des Führungskanals vorgesehen ist und daß der Stromabnehmer-Kohleblock (34) mit einer abgeschrägten Gleitfläche schräg zur Richtung der Stromschiene (18) steht und nach vorne und unten spitz zuläuft.

2. Stromzuführungssystem nach Anspruch 1, dadurch gekennzeichnet, daß der Stromabnehmer-Kohleblock (34) federbeaufschlagt ist.

3. Stromzuführungssystem nach einem der Ansprüche 1 oder 2, dadurch gekennzeichnet, daß der Stromabnehmer-Kohleblock (34) eine im wesentlichen rechteckige Querschnittsgestalt aufweist.

4. Stromzuführungssystem nach einem der Ansprüche 1 bis 3, dadurch gekennzeichnet, daß der Stromabnehmer-Kohleblock (34) in einem schräg angeordneten nach unten offenen Führungsgehäuse (36) gehaltert ist.

5. Stromzuführungssystem nach einem der Ansprüche 1 bis 4, dadurch gekennzeichnet, daß der Stromabnehmer-Kohleblock (34) funktionell mit vertieften Schmutzbehältern (46) im Führungskanal (12) zusammenwirkt.

6. Stromzuführungssystem nach einem der Ansprüche 1 bis 4, dadurch gekennzeichnet, daß die Stromabnehmereinheit zwei hintereinandergelegene in den Führungskanal ragende Stromabnehmer-Kohleblocks (30, 32) aufweist.

7. Im Boden eingießbares Schienenblockmodul für ein Stromzuführungssystem einer Elektroflurförderbahn gemäß einem der Ansprüche 1 bis 6 mit zwei Stromschienen (18, 24) in einem isolierenden Block (10), deren eine am Boden eines Führungskanals für den Eingriff des Lenksystems eines Flurförderfahrzeugs vorgesehen ist.

8. Schienenblockmodul nach Anspruch 7, gekennzeichnet durch einen in Längsrichtung des Schienenmoduls verlaufenden Kabelkanal (22).

## Claims

1. Current supply system for an electric floor conveyor track, having two current rails (18, 24), of which the first (18) is housed in a guide channel, and having a current collector unit with at least one current collector carbon block (34) projecting into the guide channel, characterized in that the first current rail (18) is provided at the bottom of the guide channel and in that the current collector carbon block (34) stands with one bevelled sliding surface oblique to the direction of the current rail (18) and tapers to a point forwards and downwards.

2. Current supply system according to Claim 1, characterized in that the current collector carbon block (34) is spring-loaded.

3. Current supply system according to one of Claims 1 and 2, characterized in that the current collector carbon block (34) has an essentially rectangular cross-sectional configuration.

4. Current supply system according to one of Claims 1 to 3, characterized in that the current collector carbon block (34) is held in a guide housing (36) which is arranged obliquely and open downwards.

5. Current supply system according to one of Claims 1 to 4, characterized in that the current collector carbon block (34) cooperates functionally with deepened dirt containers (46) in the guide channel (12).

6. Current supply system according to one of Claims 1 to 4, characterized in that the current collector unit has two current collector carbon blocks (30, 32) which are located one behind the other and project into the guide channel.

7. Rail block module, which can be cast in the ground, for a current supply system of an electric floor conveyor track according to one of Claims 1 to 6, having two current rails (18, 24) in an insulating block (10), one of which rails is provided on the bottom of a guide channel for the engagement of the steering system of a floor conveyor truck.

8. Rail block module according to Claim 7, characterized by a cable channel (22) running in the longitudinal direction of the rail module.

## Revendications

1. Système d'alimentation en courant pour une voie de manutention électrique, comportant deux rails conducteurs (18, 24) dont le premier (18) est logé dans un canal de guidage, et une unité de balai conducteur formée d'au moins un bloc de charbon de balai conducteur (34) qui entre dans le canal de guidage, caractérisé en ce que le premier rail conducteur (18) est prévu au fond du canal de guidage, et en ce que le bloc de charbon de balai conducteur (34) est incliné, avec une surface de glissement biseautée, par rapport au sens du rail conducteur (18) et va en s'effilant vers l'avant et vers le bas.

2. Système d'alimentation en courant selon la revendication 1, caractérisé en ce que le bloc de charbon de balai conducteur (34) est sollicité par ressort.

3. Système d'alimentation en courant selon l'une des revendications 1 ou 2, caractérisé en ce que le bloc de charbon de balai conducteur (34) présente une forme de section transversale sensiblement rectangulaire.

4. Système d'alimentation en courant selon l'une des revendications 1 à 3, caractérisé en ce que le bloc de charbon de balai conducteur (34) est monté dans un boîtier de guidage (36) incliné et ouvert par le bas.

5. Système d'alimentation en courant selon l'une des revendications 1 à 4, caractérisé en ce que le bloc de charbon de balai conducteur (34) coopère fonctionnellement avec des collecteurs de saletés creusés (46) prévus dans le canal de guidage (12).

6. Système d'alimentation en courant selon l'une des revendications 1 à 4, caractérisé en ce que l'unité de balai conducteur comporte deux blocs de charbon de balai conducteur (30, 32) disposés l'un derrière l'autre et entrant dans le canal de guidage.

7. Module de bloc de rails apte à être coulé dans le sol pour un système d'alimentation en courant d'une voie de manutention électrique selon l'une des revendications 1 à 6, formé de deux rails conducteurs (18, 24) dans un bloc isolant (10), dont un est prévu au fond d'un canal de guidage pour le contact du système de direction d'un véhicule de manutention.

8. Module de bloc de rails selon la revendication 7, caractérisé par une conduite de câbles (22) s'étendant dans le sens longitudinal du module de rails.
